(19) Europäisches Patentamt
European Patent Office
Office européen des brevets

(11) **EP 1 519 899 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(21) Anmeldenummer: **03740447.2**

(22) Anmeldetag: **09.07.2003**

(51) Int Cl.:
***C02F 1/42*** (2006.01)

(86) Internationale Anmeldenummer:
**PCT/EP2003/007404**

(87) Internationale Veröffentlichungsnummer:
**WO 2004/007374 (22.01.2004 Gazette 2004/04)**

(54) **Filtervorrichtung und Methode zu deren Auslegung**

Filter appliance and method for dimensioning the filter appliance

Dispositif de filtration et méthode de dimensionnement dudit dispositif

(84) Benannte Vertragsstaaten:
**AT BE BG CH CY CZ DE DK EE ES FI FR GB GR HU IE IT LI LU MC NL PT RO SE SI SK TR**

(30) Priorität: **10.07.2002 DE 10231096**

(43) Veröffentlichungstag der Anmeldung:
**06.04.2005 Patentblatt 2005/14**

(73) Patentinhaber: **Brita GmbH**
**65232 Taunusstein (DE)**

(72) Erfinder: **HEITELE, Bernd**
**65232 Taunusstein (DE)**

(74) Vertreter: **Fuchs Mehler Weiss & Fritzsche**
**Patentanwälte**
**Söhnleinstraße 8**
**D-65201 Wiesbaden (DE)**

(56) Entgegenhaltungen:
**EP-A- 1 106 578         EP-A- 1 160 204**
**DE-A- 3 003 676         DE-A- 4 422 709**
**US-A- 5 427 683**

**Beschreibung**

Die Erfindung betrifft ein Verfahren zur Herstellung einer Filtervorrichtung zur Reinigung und/oder mindestens teilweisen Entkarbonisierung von Rohwasser, mit einem Rohwasserzulauf und einem Reinwasserablauf, mit einer einen Strömungskanalabschnitt und einen ersten Filtrationsabschnitt aufweisenden Filterstrecke A und mit einer ein verstellbares Verschneideventil und einen zweiten Filtrationsabschnitt aufweisenden Verschneidestrecke B, die über eine Trenneinrichtung mit dem Rohwasserzulauf und über eine Verbindungseinrichtung mit dem Reinwasserablauf verbunden sind, wobei die beiden Filtrationsabschnitte in einem Innenbehälter angeordnet sind. Die Erfindung bezieht sich auch auf eine solche Filtervorrichtung gemäß dem Oberbegriff des Anspruchs 4.

Unter den Filtervorrichtungen werden insbesondere Entkarbonisierungsfilter, wie sie für Getränke- und Kaffeeautomaten eingesetzt werden, in der Regel mit einer Verschneideeinrichtung betrieben. Es handelt sich hierbei meist um Großgerätewasserfilter, die typischerweise einen Innenbehälter mit Volumen in der Größenordnung von 1,5 bis 25 l aufweisen und z.B. mit einem Ionentauscherharz oder anderen Materialien gefüllt sind, die dem Wasser vor allem das Karbonat und bei Bedarf je nach Art des verwendeten Filtermaterials auch Nitrate, Chloride und Sulfate oder andere Substanzen entziehen können.

Da die Karbonathärte des Rohwassers nicht immer und überall gleich groß ist, andererseits aber die Karbonathärte einen wesentlichen Einfluss u.a. auf den Geschmack, insbesondere von Kaffee hat, ist es notwendig, das filtrierte Wasser mit unfiltriertem Rohwasser zu verschneiden.

Aus der DE 196 48 405.7 ist eine Anschlusseinheit für GroßgeräteWasserfilter bekannt, die eine in den Filter hineinführende Zulaufleitung und eine, gefiltertes Wasser aus dem Filter herausführende Ablaufleitung aufweist, wobei in einem die Zulaufleitung und die Ablaufleitung verbindenden Bypass ein Dosierventil vorgesehen ist, welches eine gezielt einstellbare Verschneidung von gefiltertem und ungefiltertem Wasser in der Ablaufleitung erlaubt.

Es hat sich jedoch herausgestellt, dass derartige Verschneideeinrichtungen den eingestellten Verschnittanteil nur dann gewährleisten können, wenn der Volumenstrom hoch ist, d.h. wenn der Volumenstrom, der auch sehr stark von der Saugleistung des Verbrauchers abhängt, in einem Bereich von beispielsweise 100 bis 300 l/h liegt. Unter Volumenstrom wird immer der Volumenstrom einer kontinuierlichen Strömung verstanden.

Wenn der Volumenstrom gering ist, tritt eine Abweichung von dem über das Verschneideventil eingestellten Wert in der Weise auf, dass der ungefilterte Rohwasseranteil mit abnehmendem Volumenstrom ansteigt. In diesem Fall ist es notwendig, über das Dosierventil eine Korrektur vorzunehmen, was insofern nicht ohne weiteres möglich ist, weil die Abweichung von der eingestellten Verschnittmenge in der Regel nicht bekannt ist.

Weiterhin sind Verschneideventile bekannt, die bei einer Verstellung sowohl die Filterstrecke als auch die Verschneidestrecke beeinflussen. Derartige Verschneideventile sind mechanisch sehr aufwändig und damit teuer.

Aus der DE 199 58 648.9 ist eine Wasserfiltervorrichtung bekannt, die eine Trennvorrichtung für die Aufteilung des über den Zulauf einströmenden Rohwassers in zwei Teilströme aufweist. Die beiden Teilströme werden über teilweise unterschiedliche Filterstrecken geführt. Hierbei ist das Verhältnis der Teilströme über ein Ventil einstellbar.

Mit dieser Filtervorrichtung sollte das Problem gelöst werden, dass das der Vorrichtung entnommene Wasser zwar einerseits nicht vollständig entkarbonisiert ist, andererseits jedoch alle anderen unerwünschten Substanzen vollständig aus dem Wasser entfernt sind. Um dies zu erreichen, durchströmt der eine Teilstrom das üblicherweise verwendete Ionentauscherharz und z.B. Aktivkohle und der andere Teilstrom z.B. nur die Aktivkohle. Das Problem der Veränderung des Verschnittanteils bezüglich der Gesamtmenge bei geringen Durchflussraten wird jedoch nicht angesprochen.

Aus der DE-AS 15 36 899 ist ein kombinierter Druckfilter aus Aufwärtsstrom- und Abwärtsstrom-Filter bekannt, bei dem das Filtrat mit möglichst kleinem Druckverlust gleichmäßig vom gesamten Querschnitt der Feinkornfiltermasse ohne eine besondere Entnahmevorrichtung abgeführt wird. Hierbei ist der Aufwärtsstromfilter innerhalb des Abwärtsstromfilters angeordnet. Die zu filtrierende Flüssigkeit wird sowohl von oben als auch von unten zugeführt, wobei sich beide Filtrationsströme im Abwärtsstrom-Filter vereinigen.

Die EP 0 668 243 A2 beschreibt ein Verfahren zur Wasseraufbereitung sowie eine Wasseraufbereitungsmaschine, bei der die Durchlaufgeschwindigkeit des aufzubereitenden Wassers in Abhängigkeit von der Rohwasserqualität, der Art und dem Erschöpfungsgrad der eingesetzten Filterkartusche und der gewünschten Reinwasserqualität eingestellt und geregelt werden kann, wobei das Wasser innerhalb des Geräts ein oder mehrfach kontinuierlich oder diskontinuierlich umgewälzt und einer UV-Bestrahlung ausgesetzt wird.

Über ein Verschneideventil kann das Wasser durch eine zweikammrige Filterkartusche geleitet werden, wobei die Aufteilung der Wasserströme durch die Filterkartusche automatisch oder manuell einstellbar ist. Eine Nachregulierung erfolgt dann, wenn sich die Rohwasserqualität verändert.

Es ist daher Aufgabe der Erfindung, eine Filtervorrichtung und ein Verfahren zur Herstellung einer Filtervorrichtung anzugeben, bei der der eingestellte Verschnittanteil bei Änderung des Gesamtvolumenstroms weitgehend konstant bleibt.

Diese Aufgabe wird mit einem Verfahren zur Herstellung einer Filtervorrichtung gelöst, bei dem die durch die Druckverlust-Funktion $\Delta P_B(\dot{V}_B)$ definierte Strömungscharakteristik der Komponenten der Verschneidestrecke B an die durch die Druckverlust-Funktion $\Delta p_A$ $(\dot{V}_A)$ definierte Strömungscharakteristik der Komponenten der Filterstrecke A derart angepasst wird, dass für mindestens einen mittels des Verschneideventils eingestellten Verschnittanteils $X_0$ mit $X_0 = \dot{V}_B/(\dot{V}_A+\dot{V}_B)$ für Volumenströme zwischen $\dot{V}_1 = 10$ l/h bis $\dot{V}_2 = 120$ l/h (erster Volumenstrombereich) für mindestens einen zweiten Volumenstrombereich mit einer Breite von mindestens 5 l/h innerhalb des ersten Volumenstrombereichs die Verschnittbedingung gilt:

$$\frac{\left| \dot{V}_B \dfrac{1-X}{X} - \dot{V}_A \right|}{\dot{V}_A} \le 0,15 = G$$

wobei G den Grenzwert der Verschnittbedingung, X den sich in Abhängigkeit des Volumenstroms $\dot{V}_A + \dot{V}_B$ einstellenden Verschnittanteil, $\Delta p_A(\dot{V}_A)$ den Druckabfall über die Filterstrecke A und $\Delta p_B(\dot{V}_B)$ den Druckabfall über die Verschneidestrecke B jeweils in Abhängigkeit von den Volumenströmen $\dot{V}_A$, $\dot{V}_B$ in [l/min] des Wassers in den Strecken A und B bezeichnen,
wobei die Durchströmungsflächen $Q_A$ und $Q_B$, jeweils in $m^2$, und die Wegstrecken $h_A$ und $h_B$, jeweils in m, des ersten und des zweiten Filtrationsabschnitts derart ausgelegt werden, dass für die Druckverlustfaktoren $D_A$ und $D_B$, jeweils in kPah/m$^3$, der beiden Filtrationsabschnitte gilt:

$$D_A = \frac{X_0}{1-X_0} D_B$$

wobei

$$D_A = \int_0^{h_A} \frac{S_A(h)}{Q_A(h)} dh$$

$$D_B = \int_0^{h_B} \frac{S_B(h)}{Q_B(h)} dh$$

und $S_A(h)$ und $S_B(h)$, jeweils in kPah/m$^2$, die Druckverlustkoeffizienten der Filtermaterialien sind und $Q_A$ und

$h_A$ sowie $Q_B$ und $h_B$ die Durchströmungsflächen und durchströmten Wegstrecken der Filterstrecken A und B bezeichnen.

Unter der Druckverlustfunktion $\Delta p(\dot{V})$ wird die Funktion verstanden, die den Druckabfall zwischen den Verzweigungspunkten der Verteiler- und Verbindungseinrichtung beschreibt. Eventuell in oder vor der Verteilereinrichtung angeordnete Drosseln oder dergleichen bleiben hierbei außer Betracht.

Die Druckverlustfunktionen setzen sich additiv aus den entsprechenden Funktionen der hintereinander angeordneten Komponenten in den Strecken A und B zusammen. Hierbei wird zur Vereinfachung beispielsweise die Verrohrung der Strecke A zu einem Strömungskanalabschnitt zusammengefasst. In den Filtrationsabschnitten sind die darin angeordneten Filter bestimmend für die Strömungscharakteristik und somit für die entsprechende Druckverlustfunktion in diesem Abschnitt.

Es hat sich herausgestellt, dass durch eine Anpassung der Auslegung der Komponenten die Druckverlustfunktion $\Delta p_B$ an die Druckverlustfunktion $\Delta p_A$ soweit angeglichen werden kann, dass bei unterschiedlichen Volumenströmen der eingestellte Verschnittanteil im wesentlichen gleich bleibt.

Bei der Auslegung der Komponenten der Strekken A und B wird zunächst ein Verschnittanteil $X_0$ vorgegeben, der vorzugsweise dem Verschnittanteil entspricht, mit dem die Filtervorrichtung üblicherweise betrieben wird. Dieser Verschnittanteil wird auch als Grundauslegung bezeichnet.

Ferner wird die Auslegung der Komponenten für einen Volumenstrombereich vorgenommen, der bezüglich des Verschnittanteils besonders sensibel reagiert. Es wurde festgestellt, dass es nicht erforderlich ist, bei der Auslegung der Komponenten den gesamten Volumenstrombereich zu berücksichtigen, in dem die Filtervorrichtung eingesetzt werden kann. Es hat sich vielmehr gezeigt, dass für die Auslegung ein erster Volumenstrombereich, der durch die Grenzwerte $\dot{V}_1 = 10$ l/h und $\dot{V}_2 = 120$ l/h definiert werden kann, und innerhalb dieses ersten Bereichs wiederum mindestens ein zweiter Volumenstrombereich mit einer Breite von mindestens 5 l/h ausreichend ist. Durch die Größe der Filtervorrichtung und hier insbesondere durch die Volumengröße des Innenbehälters wird vor allem die Strömungscharakteristik der Druckverlustfunktion $\Delta p_B(\dot{V}_B)$ innerhalb dieses Bereiches zwischen $\dot{V}_1$ und $\dot{V}_2$ beeinflusst, so dass die Lage des zweiten Volumenstrombereichs innerhalb der Grenzen $\dot{V}_1$ und $\dot{V}_2$ wandern kann. Wenn die Anpassung der Komponenten der Filtervorrichtung für Volumenströme im zweiten Volumenstrombereich durchgeführt wurde, hat sich gezeigt, dass auch bei kleineren Volumenströmen, d.h. im Bereich von $\dot{V}_1$ bis zum Beginn des zweiten Volumenstrombereichs sich der Verschnittanteil X bei Veränderung des Gesamtvolumenstroms nahezu nicht ändert.

Vorzugsweise liegt der Grenzwert für G bei 0,10, insbesondere bei 0,05. Bevorzugte Werte für die Breite des zweiten Volumenstrombereichs sind mindestens 10 l/h, insbesondere mindestens 15 l/h.

Vorzugsweise wird das Verschneideventil und der zweite Filtrationsabschnitt derart ausgelegt, dass im zweiten Volumenstrombereich gilt: $\Delta p_{B1}$ ($\dot{V}_B$) < $\Delta p_{B2}$ ($\dot{V}_B$), wobei $\Delta p_{B1}$ ($\dot{V}_B$) die Druckverlustfunktion des Verschneideventils und $\Delta p_{B2}$ ($\dot{V}_B$) die Druckverlustfunktion des zweiten Filtrationsabschnittes bezeichnen.

In diesem Fall dominiert die Strömungscharakteristik des zweiten Filtrationsabschnittes die Strömungscharakteristik der gesamten Verschneidestrecke B.

Vorzugsweise geht man bei der Anpassung der Komponenten vom Verschneideventil in vollständig geöffnetem Zustand aus und passt die Strömungscharakteristik $\Delta p_{A1}(\dot{V}_A)$ des Strömungskanalabschnitts an die Strömungscharakteristik $\Delta p_{B1}(\dot{V}_B)$ des Verschneideventils an.

Die Auslegung der beiden Filtrationsabschnitte wird dann derart aufeinander abgestimmt, dass die Druckverlustfunktionen $\Delta p_{A2}$ ($\dot{V}_A$) und $\Delta p_{B2}(\dot{V}_B)$ der ersten und der zweiten Filtrationsabschnitte aneinander angepasst werden, wobei die Anpassung von dem eingestellten Verschnittanteil $X_0$ abhängt.

Die Filtervorrichtung ist dadurch gekennzeichnet, dass $Q_A$ im Bereich von 0,0005 m² bis 0,06 m² und $Q_B$ im Bereich von 0,0001 m² bis 0,03 m² liegt, wobei $Q_A$ die Durchströmungsfläche der Filterstrecke A und $Q_B$ die Durchströmungsfläche der Filterstrecke B bezeichnet und dass $Q_A$ und $Q_B$, jeweils in m² und die durchströmten Wegstrecken $h_A$ und $h_B$ der Filterstrecken A und B, jeweils in m, des ersten und des zweiten Filtrationsabschnitts derart ausgelegt sind, dass für die Druckverlustfaktoren $D_A$ und $D_B$, jeweils in kPah/m³, der beiden Filtrationsabschnitte gilt:

$$D_A = \frac{X_0}{1 - X_0} D_B$$

wobei

$$D_A = \int_0^{h_A} \frac{S_A(h)}{Q_A(h)} dh$$

$$D_B = \int_0^{h_B} \frac{S_B(h)}{Q_B(h)} dh$$

und $S_A(h)$ und $S_B(h)$, jeweils in kPah/m², die Druckverlustkoeffizienten der Filtermaterialien und $X_0$ einen mittels des Verschneideventils eingestellter Verschnittanteil mit $X_0 = \dot{V}_B/(\dot{V}_A + \dot{V}_B)$ mit den Volumenströmen $\dot{V}_A$, $\dot{V}_B$ in [l/min] in den Filterstrecken A und B bezeichnen.

Bei Schüttungen sind die Wegstrecken $h_A$ und $h_B$ durch die Filterbetthöhen definiert. Bei Sinterblöcken, die beispielsweise zylindrisch mit zentralem Filtratkanal ausgebildet sind und von außen angeströmt werden, wird die Wegstrecke durch die Wandstärke des Zylinders definiert. Der Zylindermantel bildet in diesem Beispiel die Durchströmungsfläche.

Die Druckverlustkoeffizienten werden bei Filterschüttungen durch die Korngrößen und bei Sinterkörpern durch die Porengröße bestimmt.

Die Korngrößen liegen vorzugsweise im Bereich von 0,1 bis 2 mm, wobei diese Angaben sich auf den Mittelwert einer Normalverteilung beziehen. Vorzugsweise wird für die Filterschüttung Aktivkohle verwendet.

Das Filtermaterial der Filterstrecken A und/oder B ist vorzugsweise ein Filterblock, insbesondere ein gesinterter Filterblock, mit Porengrößen im Bereich von 0,1 bis 100 µm. Diese Angaben beziehen sich auf mittlere Porengrößen einer Normalverteilung.

Anstelle von Filterschüttungen oder Sinterblöcken können auch Filtermembrane eingesetzt werden.

Im Rahmen der Erfindung ist es auch möglich, die beiden Filtrationsabschnitte miteinander zu verbinden, um beispielsweise Filtermaterial gemeinsam sowohl für die Strecke A als auch für die Strecke B zu nutzen.

Vorzugsweise mündet der Auslauf des zweiten Filtrationsabschnitts in den ersten Filtrationsabschnitt. Die Einmündung kann im Bereich der zweiten Hälfte des ersten Filtrationsabschnitts stattfinden.

Die erste Filterkammer bildet den Filtrationsabschnitt der Filterstrecke A und die zweite Filterkammer bildet den Filtrationsabschnitt der Verschneidestrecke. Durch die Integration der zweiten Filterkammer in die erste Filterkammer wird eine platzsparende Anordnung geschaffen.

Die beiden Filterkammern sind den beiden Teilströmen zugeordnet und können gegebenenfalls in Kammerabschnitte oder Unterkammern unterteilt sein. Vorzugsweise ist mindestens eine der beiden Filterkammern in mindestens zwei Kammerabschnitte unterteilt, in denen unterschiedliche Filtermaterialien angeordnet sind.

Es ist außerdem möglich, in der Sammelkammer und/oder im Reinwasserablauf Filtermaterial anzuordnen. Auf diese Weise wird ein gemeinsamer Nachfilter realisiert.

Vorzugsweise erstrecken sich beide Filterkammern bis zur Sammelkammer, die sich über der Bodenwand des Innenbehälters befindet, wobei die erste Filterkammer die zweite Filterkammer ringförmig umschließt. Es wird dadurch eine rotationssymmetrische Anordnung geschaffen, die es erlaubt, die Flüssigkeit aus der Filterstrecke A und die aus der Verschneidestrek-

ke B zentral, vorzugsweise nach oben, abzuführen.

Eine derartige Ausführungsform kann mit wenigen Bauteilen kostengünstig ausgeführt werden. Vorzugsweise ist hierzu auf der Bodenwand des Innenbehälters eine ringförmige Drainageplatte mit Filtratöffnungen angeordnet, die auf der der Bodenwand zugewandten Seite radial verlaufende Sammelkanäle und einen sich von der Drainageplatte nach oben erstreckenden becherförmigen Einsatz aufweist.

Eine andere Ausführungsform sieht im wesentlichen drei ineinandergesteckte Komponenten vor, die aus einem Innenbecher, einem Filterbecher und einem Außenbecher bestehen.

Der Reinwasserablauf aus der Sammelkammer kann an der Unterseite des Innenbehälters angeordnet sein. Für die Abführung des Reinwassers an der Oberseite des Innenbehälters ist es vorteilhaft, im Innern des Innenbehälters ein Steigrohr anzuordnen, das vorzugsweise ein doppelwandiges Rohr sein kann, durch das auch der Zulauf eines Teilstroms zu einer der beiden Filterkammern erfolgt.

Das doppelwandige Rohr ist vorzugsweise im Deckel angeordnet und kann zwischen dem becherförmigen Einsatz bzw. zwischen Innen- und Außenbecher und dem Deckel angeordnet sein.

Das Außenrohr des doppelwandigen Rohres kann in die erste Filterkammer oder eines entsprechenden Kammerabschnitts der ersten Filterkammer ragen. Bei dieser Ausführungsform wird ein Volumenbereich der ersten Filterkammer vom zweiten Teilstrom mitbenutzt. Um das Wasser austragen zu können, ist vorzugsweise am unteren Ende des Außenrohrs, insbesondere im Bereich der ersten Filterkammer, eine Verteilereinrichtung angeordnet, die gemäß einer besonderen Ausführungsform über den Umfang des Außenrohrs verteilte Düsen umfasst.

Die erste Filterkammer kann wenigstens mit ionentauscherharz gefüllt sein, während die zweite Filterkammer beispielsweise mit Aktivkohle gefüllt sein kann.

Beispielhafte Ausführungsformen der Erfindung werden nachfolgend anhand der Zeichnungen näher erläutert. Es zeigen:

Figur 1a      ein Schaltbild einer Filtervorrichtung mit Filterstrecke und Verschneidestrecke,

Figur 1b      ein Schaltbild einer Filtervorrichtung mit Filterstrecke und Verschneidestrecke gemäß einer weiteren Ausführungsform,

Figuren 2a,b      $\Delta p$-$\dot{V}$-Diagramme der einzelnen Abschnitte der Filterstrecke A und der Verschneidestrecke B,

Figur 3a,b      $\Delta p$-$\dot{V}$-Diagramme für die gesamte Filterstrecke und die gesamte Verschneidestrecke für einen Verschnittanteil von 50% für verschiedene Volumenstrombereiche,

Figur 4      ein Diagramm, das den Verschnittanteil in Abhängigkeit des Volumenstromes $\dot{V}$ zeigt,

Figur 5      ein dem Diagramm der Figur 3a entsprechendes Diagramm für einen Verschnittanteil von 30%,

Figur 6      ein Diagramm, das den Verschnittanteil in Abhängigkeit des Volumenstromes zeigt,

Figur 7      einen Schnitt durch die Filtervorrichtung in schematischer Darstellung, und

Figur 8      einen Schnitt durch die Filtervorrichtung mit Einsätzen,

Figur 9      einen Schnitt durch die Filtervorrichtung gemäß einer weiteren Ausführungsform,

Figur 10      einen Schnitt durch eine Filtervorrichtung gemäß der schematischen Darstellung in Figur 1b.

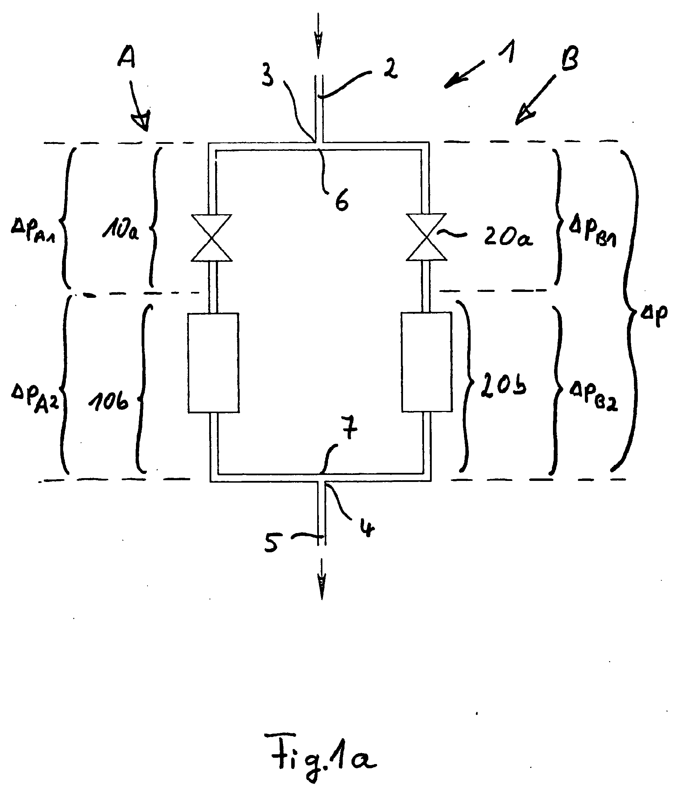

In der Figur 1a ist das Widerstands-Schaltbild einer Filtervorrichtung 1 dargestellt. Durch einen Rohwasserzulauf 2 strömt Rohwasser in eine Trenneinrichtung 3, die das Rohwasser in zwei Teilströme aufteilt. Das Rohwasser wird einer Filterstrecke A und einer Verschneidestrecke B zugeführt. Die Filterstrecke A setzt sich aus einem Strömungskanalabschnitt 10a, in dem stellvertretend für die Strömungscharakteristik ein Ventilsymbol eingezeichnet ist, und einem ersten Filtrationsabschnitt 10b zusammen. Die Verschneidestrecke B setzt sich entsprechend aus einem zweiten Filtrationsabschnitt 20b und einem vorgeschalteten Abschnitt zusammen, dessen Strömungscharakteristik durch das Verschneideventil 20a bestimmt wird.

Die beiden Ausgänge der Filterstrecke A und der Verschneidestrecke B münden in eine Verbindungseinrichtung 4, die an den Reinwasserablauf 5 angeschlossen ist.

Der Druckabfall über die Filtervorrichtung 1 zwischen den Verzweigungspunkten 6,7 ist mit $\Delta p$ gekennzeichnet. Dieser Wert $\Delta p$ setzt sich additiv aus den Werten $\Delta p_{A1}$ und $\Delta p_{A2}$ bzw. $\Delta p_{B1}$ und $\Delta p_{B2}$ zusammen, die die entsprechenden Druckabfälle an den Abschnitten 10a, 10b, 20b und am Verschneideventil 20a bezeichnen.

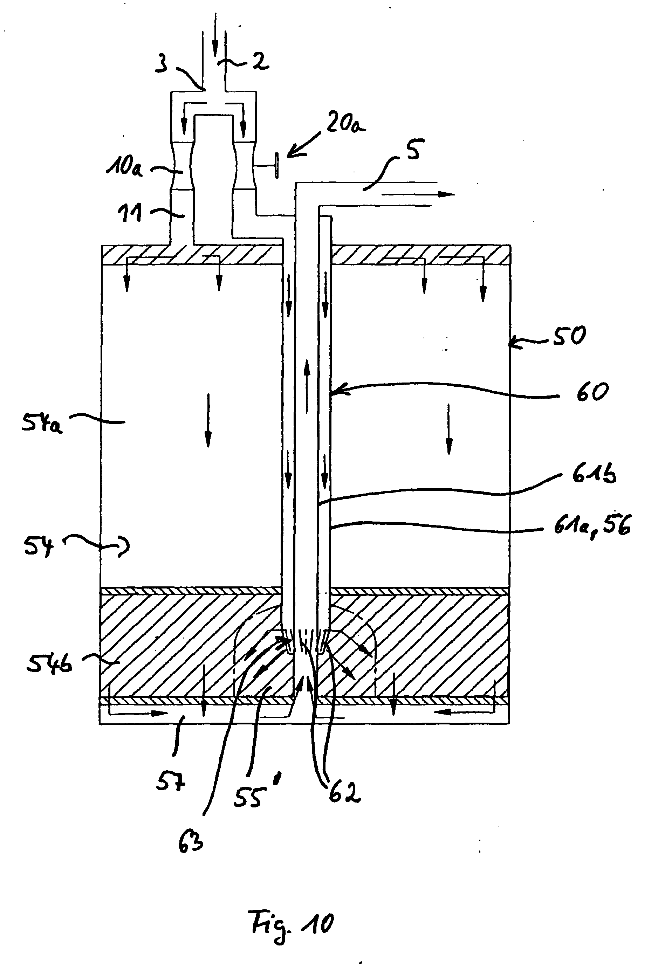

In der Figur 1b ist das Widerstands-Schaltbild einer Filtervorrichtung gemäß einer weiteren Ausführungsform dargestellt. Die Verschneidestrecke B mündet in den Filtrationsabschnitt 10b, dessen unterer Abschnitt von beiden Teilströmen genutzt wird und somit auch den zweiten Filtrationsabschnitt 20b bildet. Wie groß der vom zweiten Teilstrom genutzte Bereich des Filtrationsabschnitts ist, hängt von der Anordnung und den Druckbedingungen ab, was im Zusammenhang mit der Fig. 10 näher erläutert wird.

Der Druckabfall über die Filtervorrichtung 1 zwischen dem Verzweigungspunkt 6 und dem Austrittspunkt 7' ist ebenfalls mit $\Delta p$ gekennzeichnet. Dieser Wert $\Delta p$ setzt sich additiv aus den Werten $\Delta p_{A1}$ und $\Delta p_{A2}$ bzw. $\Delta p_{B1}$ und $\Delta p_{B2}$ zusammen, die die entsprechenden Druckabfälle an den Abschnitten 10a, 10b, 20b und am Verschneideventil 20a bezeichnen.

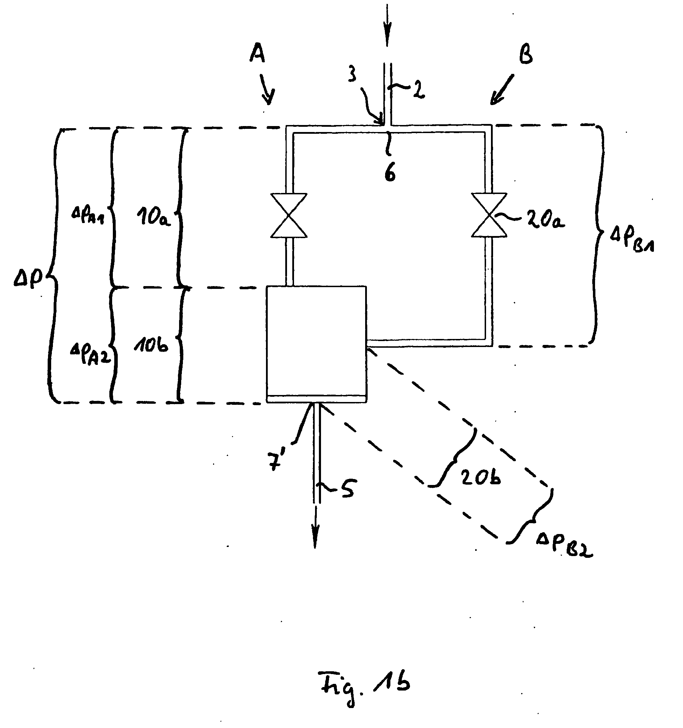

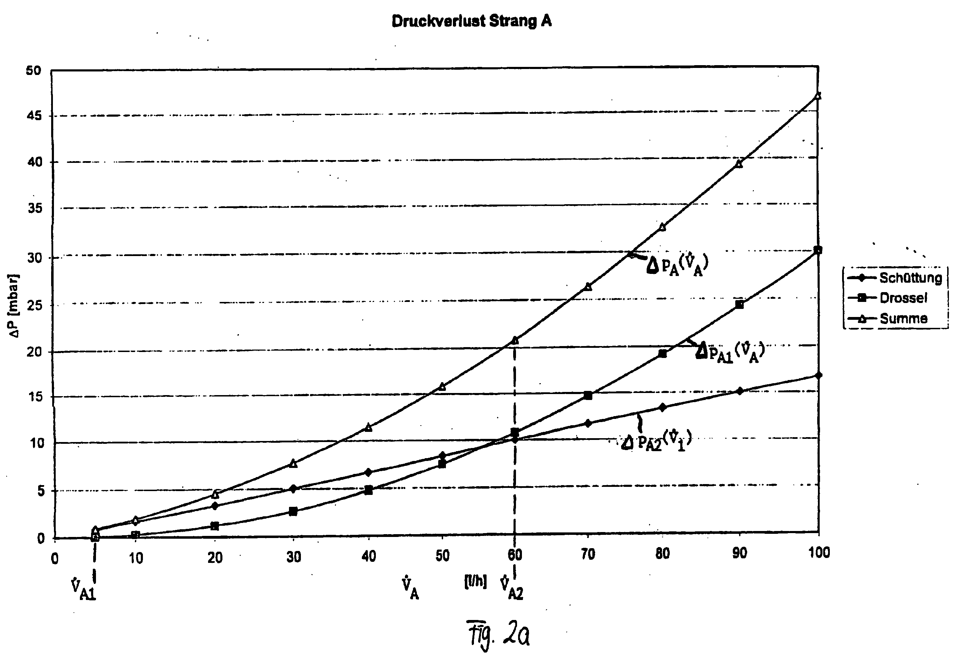

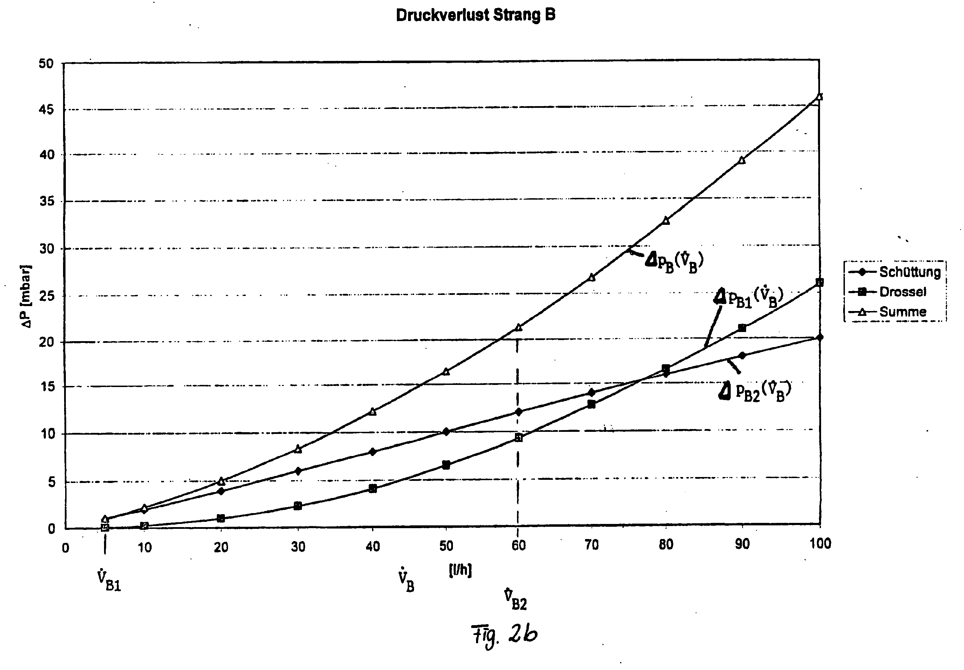

Die Druckabfälle sind Funktionen vom Volumenstrom, wie dies in den Figuren 2a und 2b für einen Verschnittanteil von 50% im Bereich des ersten Volumenstrombereichs mit $\dot{V}_1 = 10$ l/h bis $\dot{V}_2 = 120$ l/h dargestellt ist. Bei 50 % Verschnitt teilt sich der Volumenstrom zu gleichen Anteilen in $\dot{V}_A$ und $\dot{V}_B$ auf, so dass die relevanten Bereiche zwischen $\dot{V}_{A1} = 5$ l/h bis $\dot{V}_{A2} = 60$ l/h und $\dot{V}_{B1} = 5$ l/h bis $\dot{V}_{B2} = 60$ l/h liegen. Deshalb wurden die Kurven für $\dot{V}_A$ bzw. $\dot{V}_B$ nur im Wertebereich von 0 bis 100 l/h dargestellt. Während die Druckverlustfunktionen $\Delta p_{A1}(\dot{V}_A)$ und $\Delta p_{B1}(\dot{V}_A)$ eine quadratische Abhängigkeit zeigen, handelt es sich bei den Funktionen $\Delta p_{A2}(\dot{V}_B)$ und $\Delta p_{B2}(\dot{V}_B)$ jeweils um lineare Abhängigkeiten. Diesem Beispiel wurde ein Innenbehälter mit einem Volumen von 10 l zugrundegelegt.

Für $\dot{V}_A < 55$ l/h gilt $\Delta p_{A2}(\dot{V}_A) > \Delta p_{A1}(\dot{V}_A)$, d.h. die Filtercharakteristik des ersten Filtrationsabschnitts 10b hat den größeren Einfluss auf die Filtercharakteristik der Gesamtfunktion $\Delta p_A$ (s. Fig. 2a). Der zweite Volumenstrombereich erstreckt sich in diesem Bereich über den Bereich von $\dot{V}_1 = 10$ l/h und $\dot{V}_2 = 120$ l/h. Dies bedeutet, dass die Verschnittbedingung im gesamten Bereich von 10 bis 120 l/h eingehalten wird.

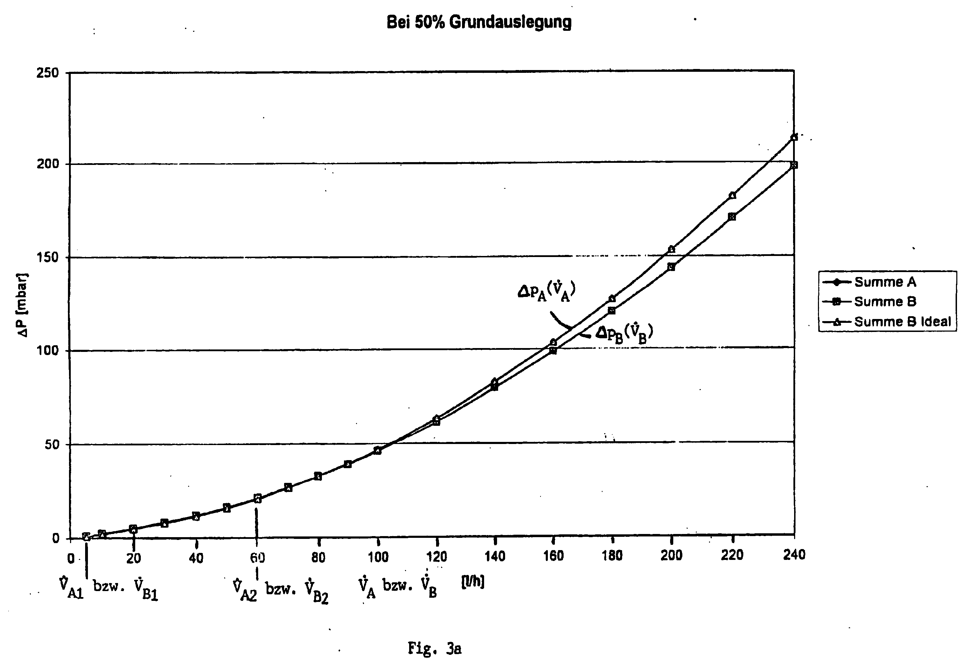

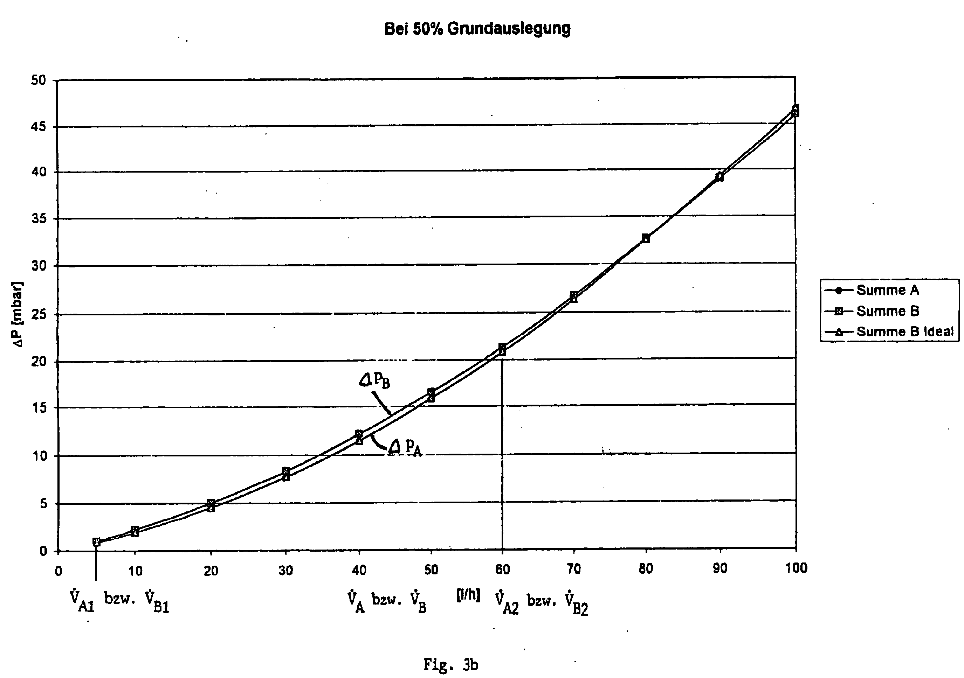

Die aus beiden Funktionen resultierenden Funktionen $\Delta p_B$ und $\Delta p_A$ sind in den Figuren 3a,b dargestellt. Die resultierenden Kurven werden oberhalb des Wertes 55 l/h für Strang A und 77 l/h für Strang B im wesentlichen durch die parabelförmige Kurven der Abschnitte 10a, 20a bestimmt, während unterhalb dieser Werte die Strömungscharakteristik der Filtrationsabschnitte die dominierende Größe ist. Dies bedeutet, dass das Verschneideventil unterhalb von 77 l/h für Strang B nur noch einen geringen Einfluss auf das Gesamtströmungsverhalten hat.

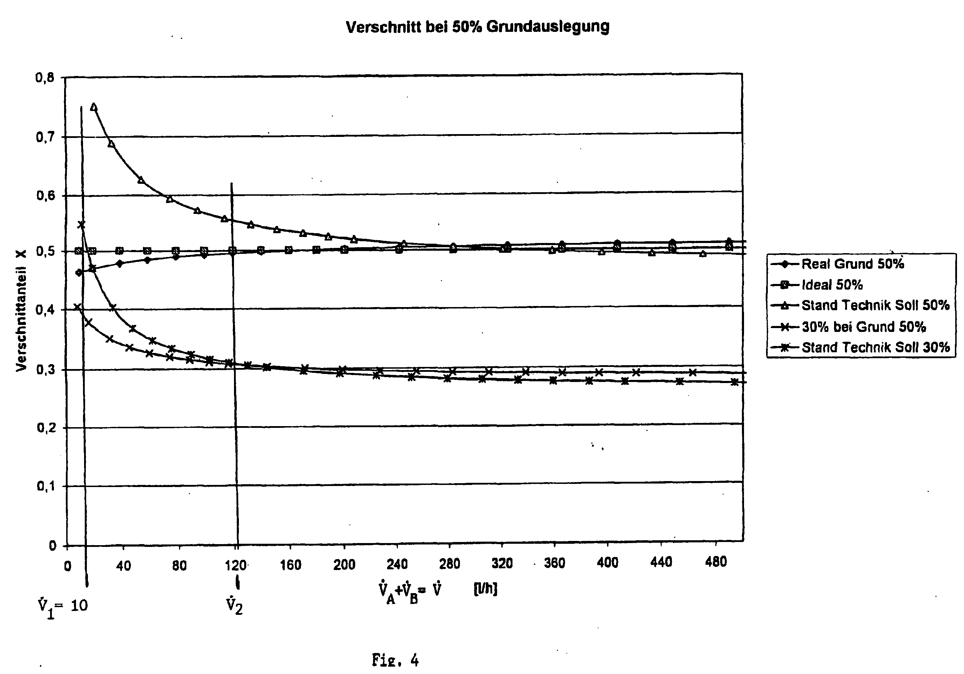

Beide in den Figuren 3a,b gezeigten Kurven sind nicht deckungsgleich, weil es nicht möglich ist, die Strömungscharakteristika der Verschneidestrecke mit der Strömungscharakteristik der Filterstrecke vollständig in Einklang zu bringen. Dies führt dazu, dass es eine geringfügige Abweichung gibt, die bei kleinen Volumenströmen, wie in Figur 4 dargestellt ist, zu einer vernachlässigbaren Abweichung von der Verschnittsollkurve um 4% führt. Für diesen Verschnittanteil $X_0$ von 50% wird somit jedoch die Bedingung

$$\frac{\left| \dot{V}_B \frac{1-X}{X} - \dot{V}_A \right|}{\dot{V}_A} \le 0,15$$

eingehalten.

In der Figur 4 sind die Verschnittanteile in Abhängigkeit vom Volumenstrom dargestellt. In dem hier gezeigten Beispiel wurde die Grundauslegung für einen Verschnittanteil $X_0$ von 50% vorgenommen. Idealerweise müsste der Verschnittanteil daher bei 0,5 über den gesamten dargestellten Volumenstrombereich konstant sein und eine Gerade ergeben, wie dies durch die Kurve "ideal 50%" dargestellt wird.
Die tatsächliche Kurve "Real Grund 50%" zeigt eine geringfügige Abweichung von etwa 4% von dieser Idealkurve bei Volumenströmen unter 50 l/h, was deutlich besser ist als die entsprechende Verschnittkurve gemäß des Standes der Technik (Kurve Stand Technik Soll 50%).

Durch eine Verstellung des Verschnittventils auf einen Verschnittanteil von 30% ergibt sich eine Kurve (30% bei Grundauslegung 50%), die bei kleinen Volumenströmen ansteigt und eine Abweichung vom Idealwert 0,3 von etwa 30% zeigt. Diese Abweichung ist immer noch deutlich geringer als beim Stand der Technik (Stand Technik Soll 30%), wo bei kleinen Volumenströmen Abweichungen des Verschnittanteils von mehr als 50% auftreten.

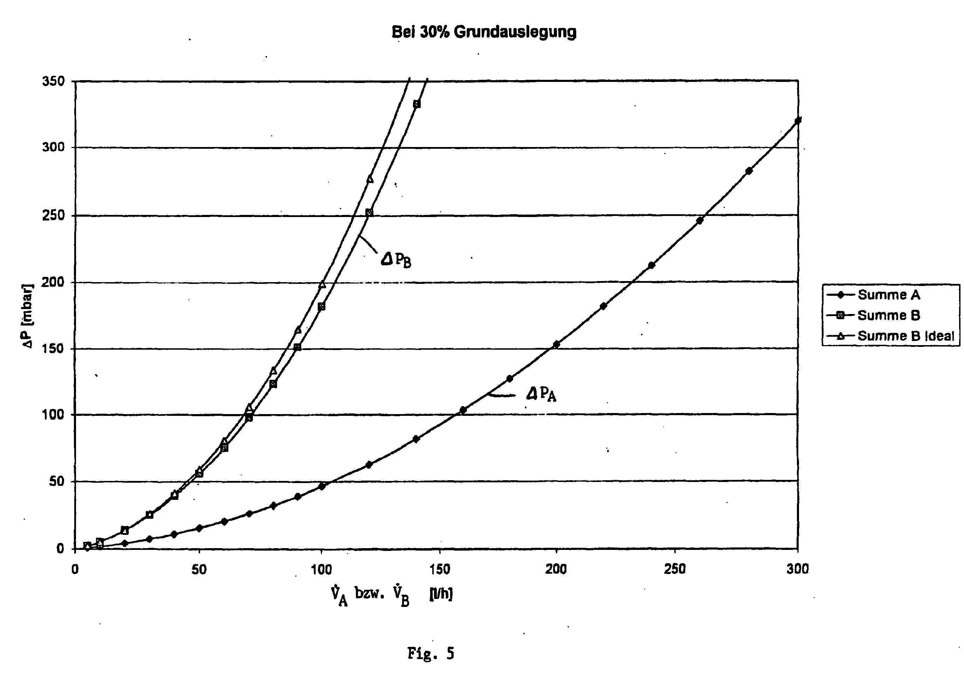

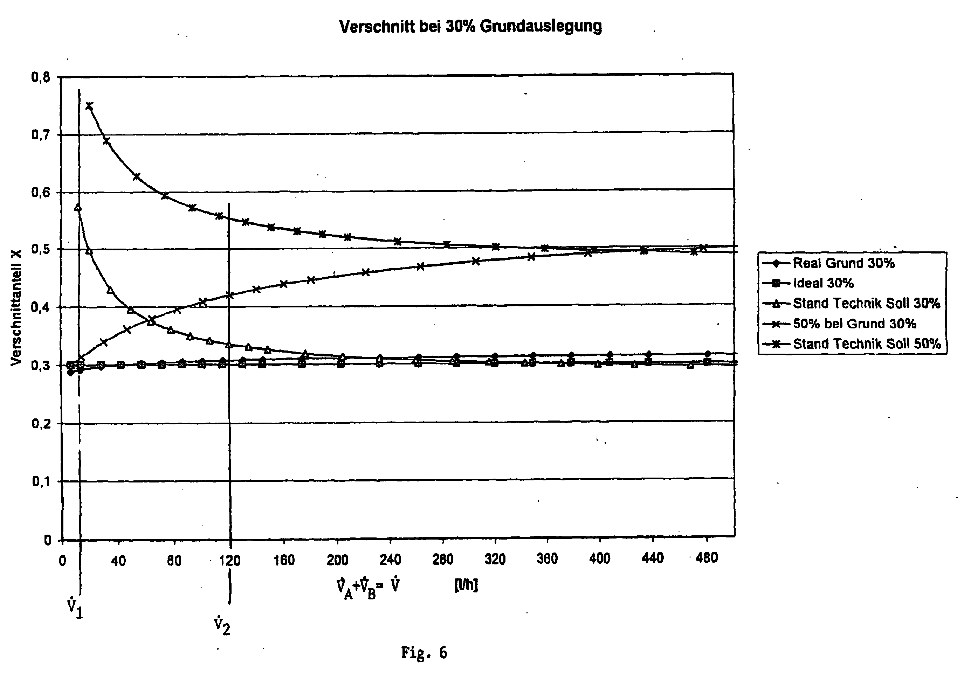

In der Figur 5 sind die Kurven $\Delta p_A$ und $\Delta p_B$ für eine Grundauslegung $X_0$ von 30% Verschnittanteil dargestellt. Die Druckverlustfunktion $\Delta p_B$ zeigt eine geringe Abweichung von der idealen Kurve (Summe B ideal), die dem eingestellten Verschnittanteil von 30% entspricht. Dies führt - wie in der Figur 6 dargestellt ist - zu einer Verschnittanteilskurve, die sich bei größeren Volumenströmen oberhalb der Geraden von 0,3 bewegt und bei einem Volumenstrom < 50 l/h unterhalb dieser idealen Geraden befindet. Die entsprechende Kurve nach dem Stand der Technik (Stand Technik Soll 30%) zeigt einen erheblichen Anstieg bei kleinen Volumenströmen.

Wenn das Verschneideventil weiter geöffnet wird, so dass ein Verschnittanteil von 50% erreicht wird, ergibt sich eine Kurve, die unterhalb des Idealwertes von 0,5 liegt. Die entsprechende Kurve zum Stand der Technik zeigt hier eine Abweichung nach oben, wobei die prozentuale Abweichung deutlich größer ist als bei der erfindungsgemäßen Auslegung.

Mit der erfindungsgemäßen Anpassung der Strömungscharakteristik der Verschneidestrecke B an die Filterstrecke A ist es möglich, die Abweichung bei mindestens einem Verschnittanteil $X_0$ auch bei kleinen Volumenströmen unter $\pm$ 5% zu halten.

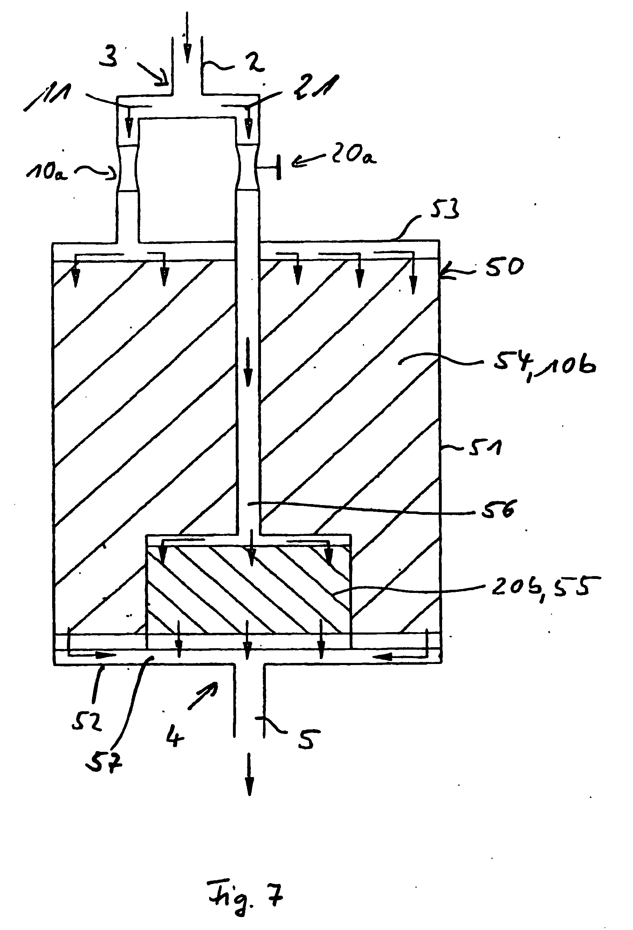

In der Figur 7 ist ein Vertikalschnitt durch eine Filtervorrichtung 1 dargestellt. Im oberen Bereich ist der Rohwasserzulauf 2 dargestellt, der in eine Trenneinrichtung 3 mündet, der das zugeführte Rohwasser in zwei Teilströme aufteilt. Der linke Teilstrom wird über den Strömungskanalabschnitt 10a und den ersten Zulauf 11 dem Innenbehälter 50 zugeführt, dessen Innenraum im wesentlichen durch eine erste Filterkammer 54 gebildet wird, die den Filtrationsabschnitt 10b bildet. Das über den Strömungskanalabschnitt 10a zufließende Rohwasser verteilt sich zwischen dem Deckel 53 und dem darunter befindlichen Filtermaterial der Filterkammer 54 und durchdringt das Filtermaterial, bis es an der Unterseite austritt und dort in der Sammelkammer 57 gesammelt wird, wo es über den Reinwasserablauf 5 der Verbindungseinrichtung 4 abgeführt wird.

Die erste Filterkammer 54 umschließt eine zweite Filterkammer 55, die den zweiten Filtrationsabschnitt 20b bildet. Es handelt sich hierbei um eine konzentrische Anordnung, wobei die zweite Filterkammer 55 ringförmig von der ersten Filterkammer 54 umschlossen wird. Beide Filterkammern erstrecken sich bis in den Bereich der Bodenwand 52, wobei die zweite Filterkammer 55 ein geringeres Volumen aufweist als die erste Filterkammer 54. Der zweite Teilstrom, der über das Verschneideventil 20a geführt wird, wird über den zweiten Zulauf 21 und das Zulaufrohr 56 der zweiten Filterkammer 55 zugeführt. Das durch diese zweite Filterkammer 55 strömende Wasser wird ebenfalls an der Unterseite über der Bodenwand 52 im Sammelkanal 57 gesammelt und fließt zusammen mit dem aus der ersten Filterkammer 54 strömenden Wasser durch den Reinwasserablauf 5 ab.

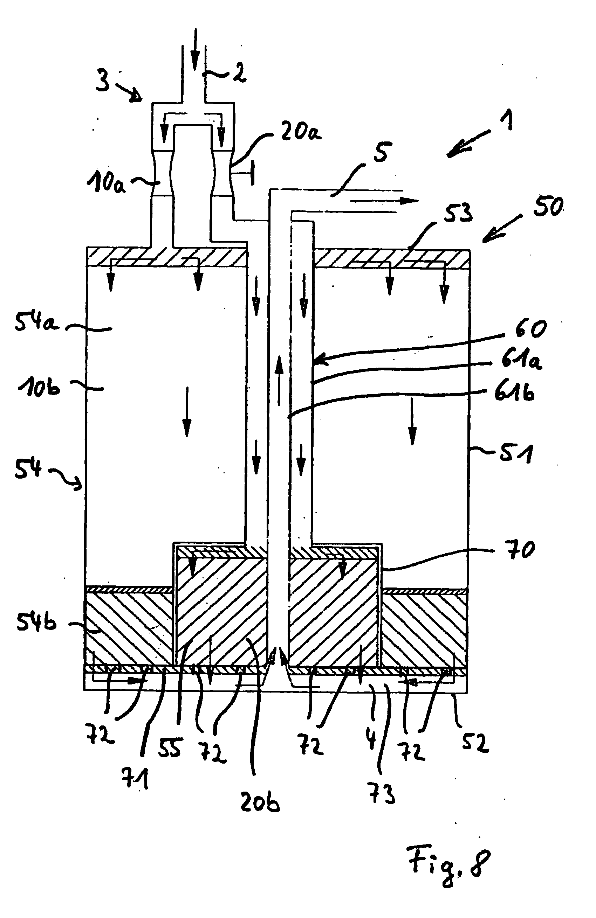

In der Figur 8 ist ein schematischer Vertikalschnitt durch eine Filtervorrichtung 1 dargestellt, die einen Innenbehälter 50 umfasst, in dem im wesentlichen die Filtrationsabschnitte 10b und 20b untergebracht sind. Der Rohwasserzulauf 2 mündet in eine Trenneinrichtung 3, in der das zulaufende Rohwasser in zwei Teilströme aufgeteilt wird. Der eine Teilstrom wird über den Strömungskanalabschnitt 10a der ersten Filterkammer 54 im Innenbehälter 50 zugeführt. Der zweite Teilstrom wird über das Verschneideventil 20a einem doppelwandigen mittig im Innenbehälter 50 angeordneten Rohr 60 zugeführt und strömt durch das Außenrohr 61a bis in die zweite Filterkammer 55.

Der Innenraum des Innenbehälters 50 wird im oberen Bereich durch die erste Filterkammer 54 gebildet, die sich in einen oberen Kammerabschnitt 54a und einen unteren Kammerabschnitt 54b unterteilt, in denen unterschiedliche Filtermaterialien angeordnet sind. Im unteren Bereich ist die zweite Filterkammer 55 angeordnet, die ringförmig von der ersten Filterkammer 54 umschlossen ist. Beabstandet zur Bodenwand 52 ist eine Drainageplatte 71 angeordnet, die Filtratöffnungen 72 aufweist. Das filtrierte Wasser sowohl aus der ersten Filterkammer 54 als auch aus der zweiten Filterkammer 55 kann auf diese Weise nach unten ablaufen und sammelt sich zwischen der Drainageplatte 71 und der Bodenwand 52. Dort werden durch die Drainageplatte 71 Sammelkanäle 73 gebildet, die die Verbindungseinrichtung 4 bilden. Das durch die Filterstrecke A und die Verschneidestrecke B zusammengeführte filtrierte Wasser wird durch den gemeinsamen Abfluss, der durch das Innenrohr 61 b gebildet wird, nach oben abgeführt und dem Reinwasserablauf 5 zugeführt. Die zweite Filterkammer 55 wird von einem becherförmigen Einsatz 70 umschlossen. Zwischen diesem becherförmigen Einsatz 70 und dem Deckel 53 ist das doppelwandige Rohr 60 angeordnet.

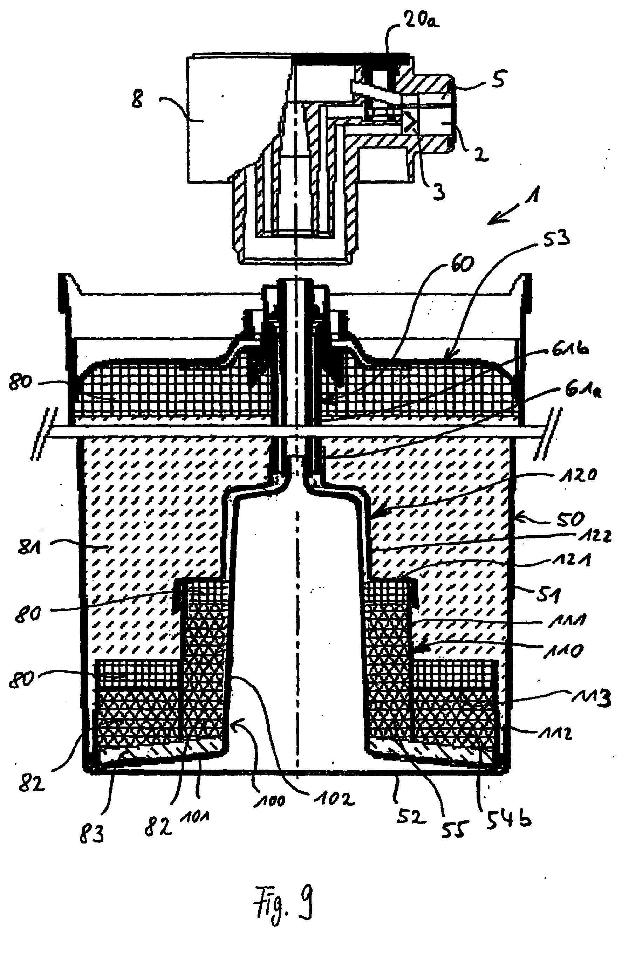

In der Figur 9 ist ein Vertikalschnitt durch eine Filtervorrichtung gemäß einer weiteren Ausführungsform dargestellt. Im oberen Teil ist der Filterkopf 8 zu sehen, der den Rohwasserzulauf 2, die Trenneinrichtung 3, das Verschneideventil 20a und den Reinwasserablauf 5 aufweist.

Dieser Kopf 8 wird auf das nach oben vorstehende doppelwandige Rohr 60 aufgesetzt, das aus einem Außenrohr 61a und einem Innenrohr 61 b besteht. Dieses doppelwandige Rohr 60 ist im Deckel 53 des Innenbehälters 50 fixiert. Unterhalb des Deckels ist ein Verteilermedium in Form eines Vlieses angeordnet, was auch die Aufgabe hat, dass darunter befindliche Ionentauschermaterial zu fixieren. Dadurch wird es möglich, die Filtervorrichtung 1 nicht nur vertikal, sondern auch horizontal zu betreiben.

Im Innenraum sind außer dem doppelwandigen Rohr 60 im Wesentlichen drei Bauteile vorhanden. Der Innenbecher 100 besteht im Wesentlichen aus einer zylindrischen oder konischen Wand 102, die sich nach oben zu verjüngt und in das Innenrohr 61b eingreift. Nach unten geht die Wand 102 in die ringförmige Siebplatte 101 über, die sich auf der Bodenwand 52 abstützt. Der Innenbecher 100 wird von einem Filterbecher 110 umgeben, der im Wesentlichen eine innere Ringwand 111 und eine äußere Ringwand 112 aufweist, die über Querstege 113 miteinander verbunden sind. Zwischen der inneren Ringwand 111 und der Zylinderwand 102 wird die zweite Filterkammer 55 gebildet, die mit granulierter Aktivkohle 82 gefüllt ist. Zwischen der inneren Ringwand 111 und der äußeren Ringwand 112 wird der Kammerabschnitt 54b gebildet, der ebenfalls mit granulierter Aktivkohle 82 gefüllt ist. Unter der granulierten Aktivkohle 82 befindet sich ein ringförmiges dichtes Geflecht, das als Partikelfilter 83 dient. Dieses Partikelfilter 83 liegt unmittelbar auf der Siebplatte 101 auf.

Nach oben schließt sich ein Außenbecher 120 an, der ebenfalls eine im Wesentlichen zylindrische Wand 122 aufweist, die sich nach oben verjüngt und das Außenrohr 61 b umgreift. Nach unten geht die Wand 122 in eine ringförmige kappenartige Abdeckung 121 über, die die innere Ringwand 111 des Filterbechers 110 übergreift. Unterhalb der Abdeckung 121 kann noch ein Verteilermedium 80 vorgesehen sein. Auch auf den Stegen 113 befindet sich ein Verteilermedium 80.

In der Figur 10 ist eine weitere Ausführungsform der Filtervorrichtung 1 dargestellt, die der schematischen Darstellung der Figur 1b entspricht. Die Filterkammer 54 ist ebenso wie in Figur 8 in zwei Kammerabschnitte 54a,b unterteilt. Das doppelwandige Rohr 60 leitet im Innenrohr 61 b das filtrierte Reinwasser von der Sammelkammer 57 nach oben zum Reinwasserablauf 5. Über den Ringraum zwischen dem Innenrohr 61 b und dem Außenrohr 61a wird - wie in Figur 8 - der zweite Teilstrom zugeführt. Das Außenrohr 61a ist am unteren Ende kegelförmig ausgebildet und abgeschlossen und weist dort über den Umfang verteilt Düsen 62 auf, durch die das Wasser des zweiten Teilstroms in den Kammerabschnitt 54b eingeleitet wird. Das aus der Verteilereinrichtung 63 austretende Wasser füllt innerhalb des Kammerabschnitts 54b einen gestrichelt eingezeichneten glockenförmigen Volumenbereich 55', der der zweiten Filterkammer 55 in den Fig. 8 und 9 entspricht. Je nach Art, Ausbildung und Anordnung der Düsen 62 sowie in Abhängigkeit des Drucks wird ein kleinerer oder größerer Volumenbereich 55' des Kammerabschnitts 54b beansprucht. Im Übergangsbereich zwischen dem Volumenbereich 55' und dem restlichen Volumenbereich des Kammerabschnitts 54b kann eine geringfügige Mischzone entstehen, in der sich die beiden Teilströme vermischen können, was jedoch vernachlässigbar ist.

## Bezugszeichen

| | |
|---|---|
| 1 | Filtervorrichtung |
| 2 | Rohwasserzulauf |
| 3 | Trenneinrichtung |
| 4 | Verbindungseinrichtung |
| 5 | Reinwasserablauf |
| 6 | Verzweigungspunkt |
| 7 | Verzweigungspunkt |
| 7' | Austrittspunkt |
| 8 | Filterkopf |
| A | Filterstrecke |
| B | Verschneidestrecke |
| 10a | Strömungskanalabschnitt |
| 10b | Filtrationsabschnitt |
| 11 | erster Zulauf |
| 20a | Verschneideventil |
| 20b | Filtrationsabschnitt |
| 21 | zweiter Zulauf |
| 30 | Anschlussarmatur |
| 40 | Druckbehälter |
| 50 | Kartusche, Innenbehälter |
| 51 | Umfangswand |
| 52 | Bodenwand |
| 53 | Deckel |
| 54 | erste Filterkammer |
| 54a,b | Kammerabschnitt |
| 55 | zweite Filterkammer |
| 55' | Volumenbereich |
| 56 | Zulaufrohr |
| 57 | Sammelkammer |
| 60 | doppelwandiges Rohr |
| 61a | Außenrohr |
| 61b | Innenrohr |
| 62 | Düse |
| 63 | Verteilereinrichtung |

| | |
|---|---|
| 70 | becherförmiges Filtergehäuse |
| 71 | Drainageplatte |
| 72 | Filtratöffnungen |
| 73 | Sammelkanal |
| 80 | Verteilermedium |
| 81 | Ionentauscher |
| 82 | granulierte Aktivkohle |
| 83 | Partikelfilter |
| 100 | Innenbecher |
| 101 | ringförmige Siebplatte |
| 102 | Wand |
| 110 | Filterbecher |
| 111 | innere Ringwand |
| 112 | äußere Ringwand |
| 113 | Querstege |
| 120 | Außenbecher |
| 121 | ringförmige Abdeckung |
| 122 | Wand |

## Patentansprüche

1. Verfahren zur Herstellung einer Filtervorrichtung (1) zur Reinigung und/oder mindestens teilweisen Entkarbonisierung von Rohwasser, mit einem Rohwasserzulauf (2) und einem Reinwasserablauf (5), mit einer einen Strömungskanalabschnitt (10a) und einen ersten Filtrationsabschnitt (10b) aufweisenden Filterstrecke A und mit einer ein verstellbares Verschneideventil (20a) und einen zweiten Filtrationsabschnitt (20b) aufweisenden Verschneidestrecke B, die über eine Trenneinrichtung (3) mit dem Rohwasserzulauf (2) und über eine Verbindungseinrichtung (4) mit dem Reinwasserablauf (5) verbunden sind, wobei die beiden Filtrationsabschnitte (10b, 20b) in einem Innenbehälter angeordnet sind, **dadurch gekennzeichnet,** **dass** die durch eine Druckverlust-Funktion $\Delta p_B(\dot{V}_B)$ definierte Strömungscharakteristik der Komponenten der Verschneidestrecke B an die durch eine Druckverlust-Funktion $\Delta p_A(\dot{V}_A)$ definierte Strömungscharakteristik der Komponenten der Filterstrecke A derart angepasst wird, dass für mindestens einen mittels des Verschneideventils eingestellten Verschnittanteil $X_0$ mit $X_0 = \dot{V}_B/(\dot{V}_A+\dot{V}_B)$ für Volumenströme zwischen $\dot{V}_1 = 10$ bis $\dot{V}_2 = 120$ l/h (erster Volumenstrombereich) für mindestens einen zweiten Volumenstrombereich mit einer Breite von mindestens 5 l/h innerhalb des ersten Volumenstrombereichs die Verschnittbedingung gilt:

$$\frac{\left|\dot{V}_B \frac{1-X}{X} - \dot{V}_A\right|}{\dot{V}_A} \leq 0{,}15 = G$$

wobei G den Grenzwert der Verschnittbedingung, X den sich in Abhängigkeit des Volumenstroms $\dot{V}_A + \dot{V}_B$ einstellenden Verschnittanteil, $\Delta p_A(\dot{V}_A)$ den Druckabfall über die Filterstrecke A und $\Delta p_B(\dot{V}_B)$ den Druckabfall über die Verschneidestrecke B jeweils in Abhängigkeit von den Volumenströmen $\dot{V}_A$, $\dot{V}_B$ in [l/min] des Wassers in den Strecken A und B bezeichnen, und

**dass** die Durchströmungsflächen $Q_A$ und $Q_B$, jeweils in m$^2$, und die Wegstrecken $h_A$ und $h_B$, jeweils in m, des ersten und des zweiten Filtrationsabschnitts (10b,20b) derart ausgelegt werden, dass für die Druckverlustfaktoren $D_A$ und $D_B$, jeweils in kPah/m$^3$, der beiden Filtrationsabschnitte (10b, 20b) gilt:

$$D_A = \frac{X_0}{1-X_0} D_B$$

wobei

$$D_A = \int_0^{h_A} \frac{S_A(h)}{Q_A(h)} dh$$

$$D_B = \int_0^{h_B} \frac{S_B(h)}{Q_B(h)} dh$$

und $S_A(h)$ und $S_B(h)$, jeweils in kPah/m$^2$, die Druckverlustkoeffizienten der Filtermaterialien sind und $Q_A$ und $h_A$ sowie $Q_B$ und $h_B$ die Durchströmungsflächen und durchströmten Wegstrecken der Filterstrecken A und B bezeichnen.

2. Verfahren nach Anspruch 1, **dadurch gekennzeichnet, dass** das Verschneideventil (20a) und der zweite Filtrationsabschnitt (20b) derart ausgelegt werden, dass im zweiten Volumenstrombereich gilt: $\Delta p_{B1}(\dot{V}_B) < \Delta p_{B2}(\dot{V}_B)$, wobei $\Delta p_{B1}(\dot{V}_B)$ die Druckverlustfunktion des Verschneideventils (20a) und $\Delta p_{B2}(\dot{V}_B)$ die Druckverlustfunktion des zweiten Filtrationsabschnitts (20b) sind.

3. Verfahren nach Anspruch 1 oder 2, **dadurch gekennzeichnet, dass** das Verschneideventil (20a) vollständig geöffnet wird, wobei das Verschneideventil (20a) eine Strömungscharakteristik $\Delta p_{B1}(\dot{V}_B)$ besitzt,
dass die Strömungscharakteristik $\Delta p_{A1}(\dot{V}_A)$ des Strömungskanalabschnitts (10a) an die Strömungscharakteristik $\Delta p_{B1}(\dot{V}_B)$ angepasst wird, und

dass die Druckverlustfunktionen $\Delta p_{A2}(\dot{V}_A)$ und $\Delta p_{B2}(\dot{V}_B)$ der ersten und der zweiten Filtrationsabschnitte (10b, 20b) aneinander angepasst werden, wobei die Anpassung von dem eingestellten Verschnittanteil $X_0$ abhängt.

4. Filtervorrichtung (1) zur Reinigung und/oder mindestens teilweisen Entkarbonisierung von Rohwasser, mit einem Rohwasserzulauf (2) und einem Reinwasserablauf (5), mit einer einen Strömungskanalabschnitt (10a) und einen ersten Filtrationsabschnitt (10b) aufweisenden Filterstrecke A und mit einer ein verstellbares Verschneideventil (20a) und einen zweiten Filtrationsabschnitt (20b) aufweisenden Verschneidestrecke B, die beide über eine Trenneinrichtung (3) mit dem Rohwasserzulauf (2) und über eine Verbindungseinrichtung (4) mit dem Reinwasserablauf (5) verbunden sind, wobei die beiden Filtrationsabschnitte in einem Innenbehälter angeordnet sind, der eine erste Filterkammer (54) aufweist, in der eine zweite Filterkammer (55) angeordnet ist, wobei jede Filterkammer (54, 55) an einen von der Trenneinrichtung (3) oben zugeführten Teilstrom angeschlossen ist, und unterhalb der beiden Filterkammern (54, 55) eine gemeinsame Sammelkammer (57) mit dem Reinwasserablauf (5) zum Sammeln der gefilterten Teilströme angeordnet ist, **dadurch gekennzeichnet, dass** $Q_A$ im Bereich von 0,0005 m$^2$ bis 0,06 m$^2$ und $Q_B$ im Bereich von 0,0001 m$^2$ bis 0,03 m$^2$ liegt, wobei $Q_A$ die Durchströmungsfläche der Filterstrecke A und $Q_B$ die Durchströmungsfläche der Filterstrecke B bezeichnet und dass $Q_A$ und $Q_B$, jeweils in m$^2$ und die durchströmten Wegstrecken $h_A$ und $h_B$ der Filterstrecken A und B, jeweils in m, des ersten und des zweiten Filtrationsabschnitts (10b, 20b) derart ausgelegt sind, dass für die Druckverlustfaktoren $D_A$ und $D_B$, jeweils in kPah/m$^3$, der beiden Filtrationsabschnitte (10b, 20b) gilt:

$$D_A = \frac{X_0}{1-X_0} D_B$$

wobei

$$D_A = \int_0^{h_A} \frac{S_A(h)}{Q_A(h)} dh$$

$$D_B = \int_0^{h_B} \frac{S_B(h)}{Q_B(h)} dh$$

und $S_A(h)$ und $S_B(h)$, jeweils in kPah/m$^2$, die Druckverlustkoeffizienten der Filtermaterialien und $X_0$ einen mittels des Verschneideventils eingestellter Verschnittanteil mit $X_0 = \dot{V}_B/(\dot{V}_A + \dot{V}_B)$ mit den Volumenströmen $\dot{V}_A$, $\dot{V}_B$ in [l/min] in den Filterstrecken A und B bezeichnen.

**5.** Filtervorrichtung nach Anspruch 4, **dadurch gekennzeichnet, dass** das Filtermaterial der Filterstrecken A und/oder B eine Filterschüttung mit mittleren Korngrößen im Bereich von 0,1 bis 2 mm ist.

**6.** Filtervorrichtung nach Anspruch 4, **dadurch gekennzeichnet, dass** das Filtermaterial der Filterstrecken A und/oder B ein Filterblock mit mittleren Porengrößen im Bereich von 0,1 bis 100 $\mu$m ist.

**7.** Filtervorrichtung nach einem der Ansprüche 4 bis 6, **dadurch gekennzeichnet, dass** der Auslauf des zweiten Filtrationsabschnitts (20b) in den ersten Filtrationsabschnitt (10b) mündet.

**8.** Filtervorrichtung nach Anspruch 7, **dadurch gekennzeichnet, dass** der Auslauf des zweiten Filtrationsabschnitts (20b) im Bereich der zweiten Hälfte des ersten Filtrationsabschnitts (10b) mündet.

**9.** Filtervorrichtung nach einem der Ansprüche 4 bis 8, **dadurch gekennzeichnet, dass** mindestens eine der beiden Filterkammern (54, 55) in mindestens zwei Kammerabschnitte (54a, 54b) unterteilt ist, in denen unterschiedliche Filtermaterialien angeordnet sind.

**10.** Filtervorrichtung nach einem der Ansprüche 4 bis 9, **dadurch gekennzeichnet, dass** in der Sammelkammer (57) und/oder im Reinwasserablauf (5) Filtermaterial angeordnet ist.

**11.** Filtervorrichtung nach einem der Ansprüche 4 bis 10, **dadurch gekennzeichnet, dass** sich beide Filterkammern (54, 55) bis zur Sammelkammer (57) erstrecken, wobei die erste Filterkammer (54) die zweite Filterkammer (55) ringförmig umschließt.

**12.** Filtervorrichtung nach einem der Ansprüche 4 bis 11, **dadurch gekennzeichnet, dass** auf der Bodenwand (52) des Innenbehälters (50) eine ringförmige Drainageplatte (71) mit Filtratöffnungen (72) angeordnet ist, die auf der der Bodenwand (52) zugewandten Seite radial verlaufende Sammelkanäle (73) und einen sich von der Drainageplatte (71) nach oben erstreckenden becherförmigen Einsatz (70) aufweist.

**13.** Filtervorrichtung nach Anspruch 12, **dadurch gekennzeichnet, dass** der Innenbehälter (50) einen Deckel (53) aufweist, in dem ein doppelwandiges Rohr (60) angeordnet ist.

**14.** Filtervorrichtung nach Anspruch 13, **dadurch gekennzeichnet, dass** das Außenrohr (61a) des doppelwandigen Rohrs (60) in die erste Filterkammer (54) ragt.

**15.** Filtervorrichtung nach Anspruch 14, **dadurch gekennzeichnet, dass** das Außenrohr (61a) im Bereich der ersten Filterkammer (54) eine Verteilereinrichtung (63) zum Austragen des zugeführten Wassers aufweist.

**16.** Filtervorrichtung nach Anspruch 15, **dadurch gekennzeichnet, dass** die Verteilereinrichtung (63) über den Umfang des Außenrohrs (61a) verteilte Düsen (62) umfasst.

**17.** Filtervorrichtung nach einem der Ansprüche 4 bis 16, **dadurch gekennzeichnet, dass** die erste Filterkammer (54) wenigstens mit Ionentauscherharz gefüllt ist.

**18.** Filtervorrichtung nach einem der Ansprüche 4 bis 17, **dadurch gekennzeichnet, dass** die zweite Filterkammer (55) wenigstens mit Aktivkohle gefüllt ist.

## Claims

**1.** Method for producing a filter appliance (1) for purifying and/or at least partly dealkalising untreated water, with an untreated water inlet (2) and a treated water outlet (5), with a filter section A comprising a flow channel portion (10a) and a first filtration portion (10b) and with a blending section B comprising an adjustable blending valve (20a) and a second filtration portion (20b), which sections are connected via a separating device (3) to the untreated water inlet (2) and via a connecting device (4) to the treated water outlet (5),
wherein the two filtration portions (10b, 20b) are disposed in an inner vessel, **characterised in that** the flow characteristic, defined by a pressure loss function $\Delta p_B(\dot{V}_B)$, of the components of the blending section B is adapted to the flow characteristic, defined by a pressure loss function $\Delta p_A(\dot{V}_A)$, of the components of the filter section A such that there applies to at least one blending proportion $X_0$, set by means of the blending valve, with $X_0 = \dot{V}_B/(\dot{V}_A+\dot{V}_B)$ for volumetric flow rates between $\dot{V}_1 = 10$ to $\dot{V}_2 = 120$ l/h (first volumetric flow rate range) for at least one second volumetric flow rate range with a range of at least 5 l/h within the first volumetric flow rate range, the blending condition:

$$\cfrac{\left[\dot{V}_B\cfrac{1-x}{x}-\dot{V}_A\right]}{\dot{V}_A}\le 0.15 = G$$

wherein G denotes the limit value of the blending condition, X the blending proportion set in accordance with the volumetric flow rate $\dot{V}_A+\dot{V}_B$, $\Delta p_A\cdot(\dot{V}_A)$ the pressure drop across the filter section A and $\Delta p_B$ $(\dot{V}_B)$ the pressure drop across the blending section B, in each case in accordance with the volumetric flow rates $\dot{V}_A$, $\dot{V}_B$ in [1/min] of the water in the sections A and B,
and **that** the flow surface areas $Q_A$ and $Q_B$, in each case in $m^2$, and the distances $h_A$ and $h_B$, in each case in m, of the first and the second filtration portion (10b, 20b) are dimensioned such that

$$D_A = \frac{X_0}{1-X_0}D_B$$

applies to the pressure loss factors $D_A$ and $D_B$, in each case in $kPah/m^3$, of the two filtration portions (10b, 20b),
wherein

$$D_A = \int_0^{h_A}\frac{S_A(h)}{Q_A(h)}dh$$

$$D_B = \int_0^{h_B}\frac{S_B(h)}{Q_B(h)}dh$$

and $S_A(h)$ and $S_B(h)$, in each case in $kPah/m^2$, are the pressure loss coefficients of the filter materials and $Q_A$ and $h_A$ as well as $Q_B$ and $h_B$ denote the flow surface areas and distances of the filter sections A and B through which water has flowed.

2. Method according to Claim 1, **characterised in that** the blending valve (20a) and the second filtration portion (20b) are dimensioned such that $\Delta p_{B1}(\dot{V}_B)$ $<\Delta p_{B2}(\dot{V}_B)$, wherein $\Delta p_{B1}(\dot{V}_B)$ is the pressure loss function of the blending valve (20a) and $\Delta p_{B2}(\dot{V}_B)$ is the pressure loss function of the second filtration portion (20b), applies in the second volumetric flow rate range.

3. Method according to Claim 1 or 2, **characterised in that** the blending valve (20a) is completely open, wherein the blending valve (20a) has a flow characteristic $\Delta p_{B1}(\dot{V}_B)$, that the flow characteristic $\Delta p_{A1}(\dot{V}_A)$ of the flow channel portion (10a) is adapted to the flow characteristic $\Delta p_{B1}(\dot{V}_B)$, and that the pressure loss functions $\Delta p_{A2}(\dot{V}_A)$ and $\Delta p_{B2}$ $(\dot{V}B)$ of the first and the second filtration portions (10b, 20b) are adapted to one another, wherein the adaptation depends on the set blending proportion $X_0$.

4. Filter appliance (1) for purifying and/or at least partly dealkalising untreated water, with an untreated water inlet (2) and a treated water outlet (5), with a filter section A comprising a flow channel portion (10a) and a first filtration portion (10b) and with a blending section B comprising an adjustable blending valve (20a) and a second filtration portion (20b), which two sections are connected via a separating device (3) to the untreated water inlet (2) and via a connecting device (4) to the treated water outlet (5), wherein the two filtration portions are disposed in an inner vessel comprising a first filter chamber (54) in which a second filter chamber (55) is disposed, wherein each filter chamber (54, 55) is connected to a partial flow supplied by the separating device (3) at the top, and a common collecting chamber (57) with the treated water outlet (5) for collecting the filtered partial flows is disposed below the two filter chambers (54, 55), **characterised in that** $Q_A$ lies in the range from 0.0005 $m^2$ to 0.06 $m^2$ and $Q_B$ in the range from 0.0001 $m^2$ to 0.03 $m^2$, wherein $Q_A$ denotes the flow surface area of the filter section A and $Q_B$ the flow surface area of the filter section B, and that $Q_A$ and $Q_B$, in each case in $m^2$, and the distances $h_A$ and $h_B$ of the sections A and B through which water has flowed, in each case in m, of the first and the second filtration portion (10b, 20b) are dimensioned such that

$$D_A = \frac{X_0}{1-X_0}D_B$$

wherein

$$D_A = \int_0^{h_A}\frac{S_A(h)}{Q_A(h)}dh$$

$$D_B = \int_0^{h_B} \frac{S_B(h)}{Q_B(h)} dh$$

and $S_A(h)$ and $S_B(h)$, in each case in kPah/m², denote the pressure loss coefficients of the filter materials and $X_0$ denotes a blending proportion set by means of the blending valve with $X_0 = \dot{V}_B/(\dot{V}_A + \dot{V}_B)$ with the volumetric flow rates $\dot{V}_A$, $\dot{V}_B$ in [1/min] in the filter sections A and B, applies to the pressure loss factors $D_A$ and $D_B$, in each case in kPah/m³, of the two filtration portions (10b, 20b).

5. Filter appliance according to Claim 4, **characterised in that** the filter material of the filter section (s) A and/or B is a filter bed with an average grain size in the range from 0.1 to 2 mm.

6. Filter appliance according to Claim 4, **characterised in that** the filter material of the filter section(s) A and/or B is a filter block with average pore sizes in the range from 0.1 to 100 $\mu$m.

7. Filter appliance according to any one of Claims 4 to 6, **characterised in that** the outlet of the second filtration portion (20b) opens into the first filtration portion (10b).

8. Filter appliance according to Claim 7, **characterised in that** the outlet of the second filtration portion (20b) opens out in the region of the second half of the first filtration portion (10b).

9. Filter appliance according to any one of Claims 4 to 8, **characterised in that** at least one of the two filter chambers (54, 55) is divided into at least two chamber portions (54a, 54b) in which different filter materials are disposed.

10. Filter appliance according to any one of Claims 4 to 9, **characterised in that** filter material is disposed in the collecting chamber (57) and/or in the treated water outlet (5).

11. Filter appliance according to any one of Claims 4 to 10, **characterised in that** the two filter chambers (54, 55) extend up to the collecting chamber (57), wherein the first filter chamber (54) encloses the second filter chamber (55) in the shape of a ring.

12. Filter appliance according to any one of Claims 4 to 11, **characterised in that** a ring-shaped drainage plate (71) with filtrate openings (72) is disposed on the bottom wall (52) of the inner vessel (50), which plate comprises, on the side which faces the bottom wall (52), radially extending collecting channels (73) and a cup-shaped insert (70) extending upwards from the drainage plate (71).

13. Filter appliance according to Claim 12, **characterised in that** the inner vessel (50) comprises a cover (53) in which a double-walled pipe (60) is disposed.

14. Filter appliance according to Claim 13, **characterised in that** the outer pipe (61a) of the double-walled pipe (60) projects into the first filter chamber (54).

15. Filter appliance according to Claim 14, **characterised in that** the outer pipe (61a) comprises, in the region of the first filter chamber (54), a distributor device (63) for discharging the supplied water.

16. Filter appliance according to Claim 15, **characterised in that** the distributor device (63) comprises nozzles (62) distributed over the circumference of the outer pipe (61a).

17. Filter appliance according to any one of Claims 4 to 16, **characterised in that** the first filter chamber (54) at least is filled with ion exchange resin.

18. Filter appliance according to any one of Claims 4 to 17, **characterised in that** the second filter chamber (55) at least is filled with activated carbon.

## Revendications

1. Procédé de fabrication d'un dispositif de filtrage (1) pour l'épuration et/ou le décarbonatage au moins partiel d'eau brute, avec une arrivée d'eau brute (2) et une sortie d'eau épurée (5), avec un trajet de filtrage A comportant un tronçon de canal d'écoulement (10a) et un premier tronçon de filtrage (10b) et avec un trajet de mélange B comportant une vanne de mélange (20a) réglable et un deuxième tronçon de filtrage (20b), qui sont reliés par un dispositif de séparation (3) à l'arrivée d'eau brute (2) et par un dispositif de liaison (4) à la sortie d'eau épurée (5), dans lequel les deux tronçons de filtrage (10b, 20b) sont disposés dans un réservoir intérieur, **caractérisé en ce que** la caractéristique d'écoulement des composants du trajet de mélange B, définie par la fonction de perte de charge $\Delta p_B(\dot{V}_B)$, est adaptée à la caractéristique d'écoulement des composants du trajet de filtrage A, définie par la fonction de perte de charge $\Delta p_A(\dot{V}_A)$, de telle sorte que, pour au moins une proportion de mélange $X_0$ avec $X_0 = \dot{V}_B/(\dot{V}_A + \dot{V}_B)$ réglée au moyen de la vanne de mélange, pour des débits volumiques entre $\dot{V}_1 = 10$ jusqu'à $\dot{V}_2 = 120$ l/h (premier intervalle de débits volumiques), on a pour au moins un deuxième intervalle de débits volumiques avec une largeur d'au moins 5 1/h à l'intérieur du premier intervalle de débits volumiques la condition de mélange:

$$\frac{\left| \dot{V}_B \frac{1-X}{X} - \dot{V}_A \right|}{\dot{V}_A} \leq 0,15 = G$$

où G désigne la valeur limite de la condition de mélange, X la proportion de mélange qui s'établit en fonction du débit volumique $\dot{V}_A + \dot{V}_B$, $\Delta p_A(\dot{V}_A)$ la perte de charge sur le trajet de filtrage A et $\Delta p_B(\dot{V}_B)$ la perte de charge sur le trajet de mélange B, chaque fois en fonction des débits volumiques $\dot{V}_A$, $\dot{V}_B$ en [l/min] de l'eau dans les trajets A et B, et **en ce que** les surfaces d'écoulement $Q_A$ et $Q_B$, chacune en m$^2$, et les longueurs de trajet $h_A$ et $h_B$, chacune en m, du premier et du deuxième tronçon de filtrage (10b, 20b), sont dimensionnées de telle sorte que l'on a pour les facteurs de perte de charge $D_A$ et $D_B$, chacun en kPah/m$^3$, des deux tronçons de filtrage (10b, 20b) :

$$D_A = \frac{X_0}{1 - X_0} D_B$$

où

$$D_A = \int_0^{h_A} \frac{S_A(h)}{Q_A(h)} dh$$

$$D_B = \int_0^{h_B} \frac{S_B(h)}{Q_B(h)} dh$$

et SA(h) et SB(h), chacun en kPah/m$^2$, sont les coefficients de perte de charge des matériaux filtrants et $Q_A$ et $h_A$, ainsi que $Q_B$ et $h_B$, désignent les surfaces traversées par l'écoulement et les longueurs de trajet des trajets de filtrage A et B.

2. Procédé selon la revendication 1, **caractérisé en ce que** la vanne de mélange (20a) et le deuxième tronçon de filtrage (20b) sont conçus de telle sorte que l'on a dans le deuxième intervalle de débit volumique : $\Delta p_{B1}(\dot{V}_B) < \Delta p_{B2}(\dot{V}_B)$ , sachant que $\Delta p_{B1}(\dot{V}_B)$ est la fonction de perte de charge de la vanne de mélange (20a) et $\Delta p_{B2}(\dot{V}_B)$ la fonction de perte de charge du deuxième tronçon de filtrage (20b).

3. Procédé selon la revendication 1 ou 2, **caractérisé en ce que** la vanne de mélange (20a) est complètement ouverte, sachant que la vanne de mélange (20a) possède une caractéristique d'écoulement $\Delta p_{B1}(\dot{V}_B)$,
**en ce que** la caractéristique d'écoulement $\Delta p_{A1}(\dot{V}_A)$ du tronçon de canal d'écoulement (10a) est adaptée à la caractéristique d'écoulement $\Delta p_{B1}(\dot{V}_B)$ et
**en ce que** les fonctions de perte de charge $\Delta p_{A2}(\dot{V}_A)$ et $\Delta p_{B2}(\dot{V}_B)$ du premier et du deuxième tronçon de filtrage (10b, 20b) sont adaptés l'un à l'autre, sachant que l'adaptation dépend de la proportion de mélange réglée $X_0$.

4. Dispositif de filtrage (1) pour l'épuration et/ou le décarbonatage au moins partiel d'eau brute, avec une arrivée d'eau brute (2) et une sortie d'eau épurée (5), avec un trajet de filtrage A comportant un tronçon de canal d'écoulement (10a) et un premier tronçon de filtrage (10b) et avec un trajet de mélange B comportant une vanne de mélange (20a) réglable et un deuxième tronçon de filtrage (20b), qui sont reliés tous deux par un dispositif de séparation (3) à l'arrivée d'eau brute (2) et par un dispositif de liaison (4) à la sortie d'eau épurée (5), dans lequel les deux tronçons de filtrage sont disposés dans un réservoir intérieur qui comporte une première chambre de filtrage (54), dans laquelle est disposée une deuxième chambre de filtrage (55), dans lequel chaque chambre de filtrage (54, 55) est branchée à un débit partiel acheminé en haut par le dispositif de séparation (3), et qu'en dessous des deux chambres de filtrage (54, 55), une chambre collectrice commune (57) est disposée avec la sortie d'eau épurée (5) pour recueillir les débits partiels filtrés, **caractérisé en ce que** $Q_A$ est compris dans l'intervalle de 0,0005 m$^2$ à 0,06 m$^2$ et $Q_B$ dans l'intervalle de 0,0001 m$^2$ à 0,03 m$^2$, dans lequel $Q_A$ désigne la surface traversée par l'écoulement du trajet de filtrage A et $Q_B$ la surface traversée par l'écoulement du trajet de filtrage B, et
**en ce que** $Q_A$ et $Q_B$, chacun en m$^2$, et les longueurs de trajet traversées par le courant $h_A$ et $h_B$ des trajets de filtrage A et B, chacun en m, du premier et du deuxième tronçon de filtrage (10b, 20b), sont dimensionnés de telle sorte que, pour les facteurs de perte de charge $D_A$ et $D_B$, chacun en kPah/m$^3$, des deux tronçons de filtrage (10b, 20b), on a :

$$D_A = \frac{X_0}{1 - X_0} D_B$$

où

$$D_A = \int_0^{h_A} \frac{S_A(h)}{Q_A(h)} dh$$

$$D_B = \int_0^{h_B} \frac{S_B(h)}{Q_B(h)} dh$$

et $S_A(h)$ et $S_B(h)$, chacun en $kPah/m^2$, sont les coefficients de perte de charge des matériaux filtrants et $X_0$ désigne une proportion de mélange dans les trajets de filtrage A et B, réglée au moyen de la vanne de mélange, avec $X_0 = \dot{V}_B/(\dot{V}_A+\dot{V}_B)$, avec les débits volumiques $\dot{V}_A$, $\dot{V}_B$ en [l/min].

5. Dispositif de filtrage selon la revendication 4, **caractérisé en ce que** le matériau filtrant des trajets de filtrage A et/ou B est un lit de filtrage avec une granulométrie moyenne dans l'intervalle de 0,1 à 2 mm.

6. Dispositif de filtrage selon la revendication 4, **caractérisé en ce que** le matériau filtrant des trajets de filtrage A et/ou B est un bloc de filtrage avec des tailles moyennes de pores dans l'intervalle de 0,1 à 100 $\mu$m.

7. Dispositif de filtrage selon l'une quelconque des revendications 4 à 6, **caractérisé en ce que** la sortie du deuxième tronçon de filtrage (20b) débouche dans le premier tronçon de filtrage (10b).

8. Dispositif de filtrage selon la revendication 7, **caractérisé en ce que** la sortie du deuxième tronçon de filtrage (20b) débouche dans la zone de la deuxième moitié du premier tronçon de filtrage (10b).

9. Dispositif de filtrage selon l'une quelconque des revendications 4 à 8, **caractérisé en ce qu'**au moins une des deux chambres de filtrage (54, 55) est subdivisée en au moins deux tronçons de chambre (54a, 54b), dans lesquels sont disposés des matériaux de filtrage différents.

10. Dispositif de filtrage selon l'une quelconque des revendications 4 à 9, **caractérisé en ce que** du matériau filtrant est disposé dans la chambre collectrice (57) et/ou dans la sortie d'eau épurée (5).

11. Dispositif de filtrage selon l'une quelconque des revendications 4 à 10, **caractérisé en ce que** les deux chambres de filtrage (54, 55) s'étendent jusqu'à la chambre collectrice (57), sachant que la première chambre de filtrage (54) entoure la deuxième chambre de filtrage (55) en forme d'anneau.

12. Dispositif de filtrage selon l'une quelconque des revendications 4 à 11, **caractérisé en ce que** sur la paroi de fond (52) du réservoir intérieur (50) est disposée une plaque de drainage annulaire (71) avec des orifices pour le filtrat (72), plaque qui comporte du côté tourné vers la paroi de fond (52) des canaux collecteurs (73) s'étendant radialement, et un insert (70) en forme de bol s'étendant depuis la plaque de drainage (71) vers le haut.

13. Dispositif de filtrage selon la revendication 12, **caractérisé en ce que** le réservoir intérieur (50) comporte un couvercle (53), dans lequel est disposé un tuyau (60) à double paroi.

14. Dispositif de filtrage selon la revendication 13, **caractérisé en ce que** le tuyau extérieur (61a) du tuyau (60) à double paroi dépasse dans la première chambre de filtrage (54).

15. Dispositif de filtrage selon la revendication 14, **caractérisé en ce que** le tuyau extérieur (61a) comporte dans la zone de la première chambre de filtrage (54) un dispositif distributeur (63) pour la sortie de l'eau acheminée.

16. Dispositif de filtrage selon la revendication 15, **caractérisé en ce que** le dispositif distributeur (63) comprend des gicleurs (62) répartis sur la périphérie du tuyau extérieur (61a).

17. Dispositif de filtrage selon l'une quelconque des revendications 4 à 16, **caractérisé en ce que** la première chambre de filtrage (54) est remplie au moins de résine échangeuse d'ions.

18. Dispositif de filtrage selon l'une quelconque des revendications 4 à 17, **caractérisé en ce que** la deuxième chambre de filtrage (55) est remplie au moins de charbon actif.

Fig.1a

Fig. 1b

**Druckverlust Strang A**

fig. 2a

EP 1 519 899 B1

**Druckverlust Strang B**

Fig. 2b

EP 1 519 899 B1

**Bei 50% Grundauslegung**

Fig. 3a

EP 1 519 899 B1

**Bei 50% Grundauslegung**

Fig. 3b

EP 1 519 899 B1

**Verschnitt bei 50% Grundauslegung**

Fig. 4

EP 1 519 899 B1

Fig. 5

**Verschnitt bei 30% Grundauslegung**

Fig. 6

EP 1 519 899 B1

Fig. 7

Fig. 8

Fig. 9

Fig. 10